# EUROPÄISCHE PATENTANMELDUNG

(11) **EP 1 407 945 A2**
(43) Veröffentlichungstag der Anmeldung: **14.04.2004**
(21) Anmeldenummer: 03103563.7
(22) Anmeldetag: 25.09.2003
(51) Int. Cl.: B60R 22/48

(54) **Magnetischer Positionssensor**

(30) Priorität: 11.10.2002 DE 10247590
(71) Anmelder: Siemens Aktiengesellschaft, 80333 München (DE)
(72) Erfinder: Stäter, Helmut, 61389 Schmitten (DE); Kaltenbach, Dirk, 65189 Wiesbaden (DE)

(57) **Zusammenfassung**

Gegenstand der Erfindung ist ein magnetischer Positionssensor, insbesondere für ein Gurtschloss zur Insassensicherung in einem Kraftfahrzeug, mit einem Magnetfeldsensor (17) und einem ersten Magnet (16) der von einer ersten in eine zweite Position bewegbar ist, wobei die erste Position abseits von dem Magnetfeldsensor angeordnet ist und die zweite Position in unmittelbarer Nähe zum Magnetfeldsensor lokalisiert ist. Um einen magnetischen Positionssensor anzugeben, der trotz eines äußeren magnetischen Störfeldes zuverlässig arbeitet, ist das von dem ersten Magnet in seiner ersten Position erzeugte Magnetfeld ohne wirkungsvollen Einfluss auf den Magnetfeldsensor und ein zweiter Magnet (18) ist ausgebildet, dessen Magnetfeld sich wesentlich von dem des ersten Magneten unterscheidet und der zweite Magnet ist zumindest dann in unmittelbarer Nähe zum Magnetfeldsensor angeordnet, wenn sich der erste Magnet in seiner ersten Position befindet, wobei der zweite Magnet den Magnetfeldsensor mit einem definierten Magnetfeld beaufschlagt, das störende äußere Magnetfelder ausreichend überlagert.

## Beschreibung

Die Erfindung betrifft einen magnetischen Positionssensor, insbesondere für ein Gurtschloss zur Insassensicherung in einem Kraftfahrzeug, mit einem Magnetfeldsensor und einem ersten Magnet, der von einer ersten in eine zweite Position bewegbar ist, wobei die erste Position abseits von dem Magnetfeldsensor angeordnet ist und die zweite Position in unmittelbarer Nähe zum Magnetfeldsensor lokalisiert ist.

Ein riegelabfühlender Sitzgurtverschluss ist aus der DE 100 58 978 A1 bekannt. Dieser Verschluss umfasst einen Sensor und einen Magneten. Der Magnet ist von einer ersten Position zu einer zweiten Position bewegbar, wenn das verriegelbare Element in den Durchlass des Gurtverschlusses eingeführt wird. Am Sensor erzeugt der Magnet je nach eingenommener Position zwei verschiedene magnetische Flussdichten, so dass der Sensor zwei den Positionen des Magneten entsprechende Ausgangssignale erzeugt.

Nachteilig bei dieser Vorrichtung ist, dass der Magnet in der vom Sensor entfernten Position nur eine sehr geringe magnetische Feldstärke an den Sensor anlegt. Durch ein äußeres magnetisches Störfeld kann das Magnetfeld des Magneten leicht überlagert werden, wodurch der Sensor ein Signal abgibt, das er nur dann erzeugen sollte, wenn sich der Magnet in seiner unmittelbaren Nähe befindet. Bei der Anwendung eines solchen Sensors in einem Sitzgurtverschluss eines Kraftfahrzeuges besteht der Nachteil, dass auch bei nicht verriegeltem Gurtschloss ein solches Fehlersignal erzeugbar ist, wodurch eine Auswerteschaltung fälschlich erkennen würde, dass der Insasse angeschnallt ist. Gerade im Umfeld der Kraftfahrzeuginsassensicherheit ist eine solche Fehlerquelle nicht hinnehmbar.

Der Erfindung liegt somit die Aufgabe zugrunde einen magnetische Positionssensor, insbesondere für ein Gurtschloss zur Insassensicherung in einem Kraftfahrzeug, anzugeben, der trotz eines äußeren magnetischen Störfeldes zuverlässig arbeitet.

Erfindungsgemäß wird die Aufgabe dadurch gelöst, dass das von dem ersten Magnet in seiner ersten Position erzeugte Magnetfeld ohne wirkungsvollen Einfluss auf den Magnetfeldsensor ist und dass ein zweiter Magnet ausgebildet ist, dessen Magnetfeld sich wesentlich von dem des ersten Magneten unterscheidet und dass der zweite Magnet zumindest dann in unmittelbarer Nähe zum Magnetfeldsensor angeordnet ist, wenn sich der erste Magnet in seiner ersten Position befindet, wobei der zweite Magnet den Magnetfeldsensor mit einem definierten Magnetfeld beaufschlagt, das störende äußere Magnetfelder ausreichend überlagert.

Die Erfindung hat den Vorteil, dass durch den zweiten Magneten im Magnetfeldsensor eine definierte magnetische Feldstärke und Feldrichtung erzeugt wird, auf Grund derer der Sensor ein Signal erzeugt, das dem unangeschnallten Zustand der Fahrzeuginsassen zugeordnet wird, wobei die definierte magnetische Feldstärke und Feldrichtung des zweiten Magneten durch seine unmittelbare Nähe zum Sensor auch dann noch im Sensor dominiert, wenn ein störendes äußeres Magnetfeld in die Nähe des Gurtschlosssensors gebracht wird.

Bei einer ersten Ausgestaltung der Erfindung sind der erste Magnet und der zweite Magnet in einer Ebene nebeneinander angeordnet, wobei die Verbindungslinien zwischen dem Nordpol und dem Südpol des ersten Magneten und dem Nordpol und dem Südpol des zweiten Magneten weitgehend senkrecht zu dieser Ebene stehen. Dadurch wird es möglich den ersten und den zweiten Magneten in einem verschiebbaren Element so anzuordnen, dass je nach der Position des verschiebbaren Elements einmal der eine und einmal der andere Magnet in die unmittelbare Nähe des Magnetfeldsensors gerückt wird. Hierbei können die Magnete direkt aneinander liegen oder es kann ein bestimmter Abstand zwischen den Magneten vorgesehen sein. Das verschiebbare Element kann zum Beispiel die Ausstoßvorrichtung eines Gurtschlosses sein.

Bei einer Weiterbildung ist auf der Seite der Ebene auf der der Nordpol des ersten Magneten angeordnet ist, der Südpol des zweiten Magneten angeordnet. Dadurch, dass dem Magnetfeldsensor zwei unterschiedliche Pole zugewandt sind, wird er bei jeder der zwei Positionen des verschiebbaren Elements in einen eindeutigen Zustand gezwungen, der durch äußere magnetische Einflüsse nicht störbar ist.

Bei einer weiteren Ausgestaltung liegt der zweite Magnet dem Magnetfeldsensor direkt gegenüber, wenn sich der erste Magnet in seiner ersten Position befindet. Hierdurch wird gewährleistet, dass der Magnetfeldsensor immer mit einem definierten Magnetfeld versorgt wird.

Bei einer Ausführungsform ist der zweite Magnet in seiner Position unveränderbar auf einer ersten felderkennenden Seite des Magnetfeldsensors angeordnet und baulich mit dem Magnetfeldsensor verbunden. Dies ist eine sehr kostengünstige Ausführungsform, da der zweite Magnet zum Beispiel einfach durch Verkleben mit dem Magnetfeldsensor verbunden werden kann. Bei dieser Anordnung wird der Magnetfeldsensor permanent mit dem vom ersten Magnet erzeugten Magnetfeld beaufschlagt.

Bei einer weiteren Ausgestaltung ist der erste Magnet auf einer zweiten felderkennenden Seite des Magnetfeldsensors angeordnet und der erste Magnet wendet dem Sensor den gleichen Magnetpol zu, wie der zweite Magnet.

Bei einer nächsten Weiterbildung erzeugt der erste Magnet eine deutlich höhere Feldstärke, als der zweite Magnet.

Dadurch kann der erste Magnet, wenn er in die Nähe des Magnetfeldsensors geschoben wird, die Feldstärke des zweiten Magneten signifikant überlagern und den Magnetfeldsensor in einen neuen Schaltzustand zwingen.

Die Erfindung lässt zahlreiche Ausführungsformen zu. Zwei davon sollen anhand der in den Zeichnungen dargestellten Figuren erläutert werden. Diese zeigen in
- Figur 1:: ein aus Kraftfahrzeugen bekanntes Insassenrückhaltesystem,
- Figur 2:: einen Schnitt durch ein Gurtschloss nach dem Stand der Technik, unter dem Einfluss eines störenden äußeren Magnetfeldes,
- Figur 3:: einen Schnitt durch ein Gurtschloss mit dem erfindungsgemäßen Gurtschlossschalter,
- Figur 4:: einen Schnitt durch ein Gurtschloss mit einer weiteren Ausführungsform des erfindungsgemäßen Gurtschlossschalters,
- Figur 5:: die Lage der Magneten auf der Ebene nach dem in Figur 4 gezeigten Ausführungsbeispiel
- Figur 6a und b:: schematische Darstellungen des Gurtschlossschalters nach den Stand der Technik,
- Figur 7a, 7b, 8a, 8b, 9a und 9b:: schematische Darstellungen der erfindungsgemäßen Gurtschlossschalters.

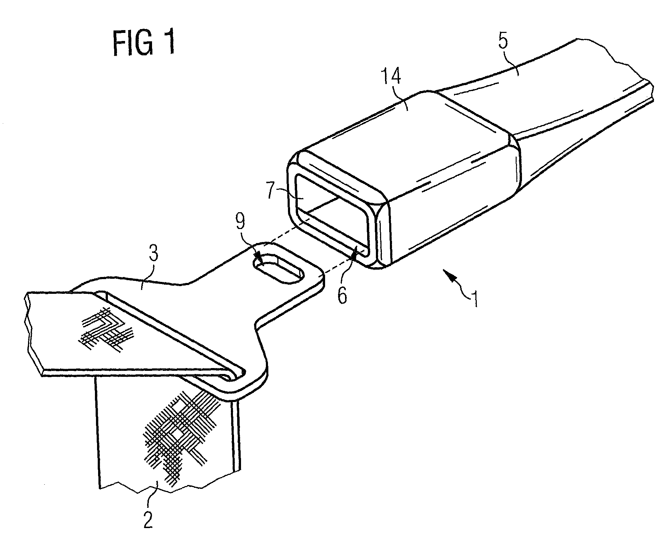

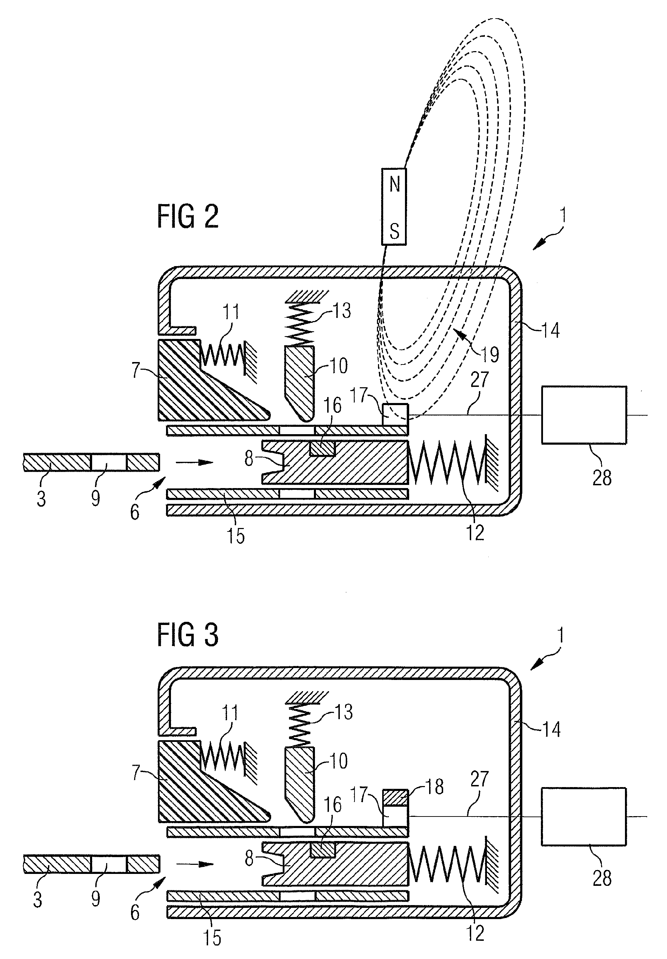

Figur 1 zeigt ein aus Kraftfahrzeugen bekanntes Insassenrückhaltesystem. Dargestellt ist ein Gurtschloss 1 mit einem Gehäuse 14, einem Druckknopf 7 und einer Öffnung 6 in die der Gurtriegel 3 eingeschoben werden kann. Das Gurtschloss 1 ist mit einem massiven Ankerkabel 5 fest verbunden, das wiederum am nicht dargestellten Fahrzeug verankert ist. Zur Insassensicherung wird der Gurtriegel 3 in das Gurtschloss 1 geschoben, wobei ein hier nicht dargestellter Sicherungsbolzen in das Langloch 9 einschnappt und den Gurtriegel 3 fest arretiert. Der durch den Gurtriegel 3 geführte Sitzgurt 2 hält den Insassen eines Fahrzeuges im Falle eines Aufpralls fest am Sitz. Der Gurtriegel 3 kann vom Gurtschloss 1 gelöst werden, indem der Druckknopf 7 betätigt wird. Das in Figur 1 dargestellte Gurtschloss 1 wird in Figur 2 detaillierter dargestellt.

Figur 2 zeigt einen Schnitt durch ein Gurtschloss nach dem Stand der Technik. Im Wesentlichen weist die Darstellung in Figur 2 die folgenden Merkmale auf. Einen Gurtriegel 3 mit einem Langloch 9 und das Gurtschloss 1 mit einem Sicherungsbolzen 10, der durch eine Spiralfeder 13 in die gewünschte Position gedrückt wird. Eine Ausstoßvorrichtung 8 die ebenfalls durch eine Spiralfeder 12 in der entsprechenden Position gehalten wird, sowie einen Druckknopf 7 der durch die Spiralfeder 11 in der vorgegebenen Position gehalten wird. Der Gurtriegel 3 ist vor der Öffnung 6 des Gurtschlosses 1 dargestellt. Somit ist der Gurtriegel 3 im Gurtschloss 1 nicht arretiert, der Fahrzeuginsasse wäre nicht angeschnallt. Der Sicherungsbolzen 10 befindet sich in einer oberen Position und wird von der Spiralfeder 13 gegen die Ausstoßvorrichtung 8 gedrückt.

In die Ausstoßvorrichtung 8 ist ein erster Permanentmagnet 16 eingelassen. Da der nicht eingeschobene Gurtriegel 3 die Ausstoßvorrichtung 8 nicht gegen die Kraft der Spiralfeder 12 zurückgedrückt hat, ist der Permanentmagnet 16 weit entfernt von dem Magnetfeldsensor 17. Der Magnetfeldsensor 17 erkennt das Magnetfeld des ersten Permanentmagneten 16 nicht, da die Feldstärke des erste Permanentmagneten 16 bei dieser Entfernung vom Magnetfeldsensor 17 nicht ausreicht, um ihn effektiv zu beeinflussen.

Wenn sich der Fahrzeuginsasse anschnallt wird der Gurtriegel 3 in die Öffnung 6 des Gurtschlosses 1 eingeschoben. Dadurch wird die Ausstoßvorrichtung 8 gegen die Federkraft der Spiralfeder 12 zurückgeschoben und der Sicherungsbolzen 10 kann in das Langloch 9 des Gurtriegels 3 einschnappen. Eine Kraft die am Gurtriegel 3 über den Sitzgurt 2 angreift, wird am Langloch 9 des Gurtriegels 3 direkt auf den Sicherungsbolzen 10 übertragen. Der Sicherungsbolzen 10 ist jedoch direkt mit der Ankerplatte 15 verbunden, die wiederum über das Ankerkabel 5 fest mit dem Kraftfahrzeug verbunden ist. Damit ist ein Kraftschluss vom Sitzgurt 2 zur hier nicht dargestellten Fahrzeugkarosserie hergestellt.

Beim Einschieben des Gurtriegels 3 in die Öffnung 6 des Gurtschlosses 1 hat der Gurtriegel 3 die Ausstoßvorrichtung 8 gegen die Federkraft der Spiralfeder 12 zurückgedrückt. Der erste Permanentmagnet 16 ist hierdurch in die unmittelbare Nähe des Magnetfeldsensors 17 gerückt. Das Magnetfeld des ersten Permanentmagneten 16 wirkt nun aus geringer Entfernung auf den Magnetfeldsensor 17. Der Magnetfeldsensor 17 generiert daher einen anderen Schaltzustand als bei nicht eingestecktem Gurtriegel. Mit dem Magnetfeldsensor 17 wird nun erkannt, dass sich der Fahrzeuginsasse angeschnallt hat. Die von dem Magnetfeldsensor 17 erzeugten Signale werden über eine elektrische Leitung 27 einer Auswerteschaltung 28 zur weiteren Verarbeitung zugeführt.

Der Nachteil der Lösung nach dem Stand der Technik wird deutlich, wenn man bei uneingestecktem Gurtriegel 3 ein äußeres magnetisches Störfeld 19 zum Gurtschloss 1 führt. Da der Magnetfeldsensor 17 vom Magnetfeld des ersten Permanentmagneten 16 nicht oder nur sehr wenig beeinflusst wird, sollte er das Signal "Fahrzeuginsasse nicht angegurtet" generieren.

Befindet sich jedoch ein äußeres magnetische Störfeldfeld 19 bei nicht eingesteckten Gurtriegel 3 in der Nähe des Gurtschlosses, so kann der Magnetfeldsensor 17 ein Signal generiert, dass er nur generieren sollte, wenn der Fahrzeuginsasse angeschnallt wäre. Dieses fehlerhaft generierte Signal kann zum erheblichen Sicherheitsrisiko für einen Fahrzeuginsassen werden, weil zum einen keine Warnung an den unangeschnallten Fahrzeuginsassen abgegeben wird und zum anderen weitere Sicherheitssysteme wie Airbag- oder Gurtstraffersteuerung mit falschen Informationen versorgt werden und so reagieren würden, als wäre der Fahrzeuginsasse angeschnallt. Störende magnetische Felder können im Fahrzeug aus verschiedenen Quellen stammen. Zum einen ist es denkbar, dass der Fahrzeuginsasse zum Beispiel als Anhänger am Schlüsselbund einen Permanentmagneten mit sich führt, den er in der Nähe des Gurtschlosses deponiert, andererseits gibt es viele Quellen für Magnetfelder in Kraftfahrzeug selber, zum Beispiel eine magnetische Ventilsteuerung. Ausgehend von dem in Figur 2 dargestellten Problem wird ein erfindungsgemäßer Gurtschlosssensor in Figur 3 dargestellt.

Figur 3 enthält die aus Figur 2 bekannten Merkmale erweitert um einen zweiten Permanentmagneten 18. Der erfindungsgemäße magnetische Positionssensor setzt sich aus einem ersten Permanentmagnet 16, einem Magnetfeldsensor 17 und einem zweiten Permanentmagnet 18 zusammen. Die vom ersten Permanentmagnet 16 erzeugte Feldstärke übertrifft die vom zweiten Permanentmagnet 18 erzeugte Feldstärke deutlich. Der zweite Permanentmagnet 18 ist in diesem Ausführungsbeispiel unmittelbar auf dem Magnetfeldsensor 17 fest angeordnet und erzeugt in diesem eine magnetische Feldstärke die von einem störenden äußeren Magnetfeld nur unwesentlich beeinflusst werden kann. Detektiert der Magnetfeldsensor 17 die Feldstärke die vom zweiten Permanentmagnet 18 hervorgerufen wird, so erkennt der Magnetfeldsensor 17 den unangeschnallten Zustand des Fahrzeuginsassen. Das von Magnetfeldsensor 17 erzeugte Signal wird über die elektrische Leitung 27 der Auswerteschaltung 28 zugeführt.

Wird der Gurtriegel 3 jedoch in die Öffnung 6 eingesteckt, wobei die Ausstoßvorrichtung 8 zurückgeschoben wird, dann wird der erste Permanentmagnet 16 in unmittelbarer Nähe zum Magnetfeldsensor 17 platziert. Da die Feldstärke des ersten Permanentmagneten 16 wesentlich höher ist als die Feldstärke des zweiten Permanentmagneten 18, erkennt der Magnetfeldsensor 17 nun den ersten Permanentmagnet 16. Der Magnetfeldsensor 17 generiert durch die unmittelbare Nähe des ersten Permanentmagneten 16 nun ein Signal das den angeschnallten Zustand des Fahrzeuginsassen darstellt. Die Auswerteschaltung 28 versorgt nachfolgende Geräte, wie zum Beispiel die Airbagsteuerung, mit den entsprechenden Informationen. Störungen durch äußere Magnetfelder werden durch den erfindungsgemäßen magnetischen Positionssensor ausgeschlossen, weil der Magnetfeldsensor 17 sowohl bei angeschnalltem, als auch bei unangeschnalltem Insassen mit einem definierten Magnetfeld beaufschlagt wird.

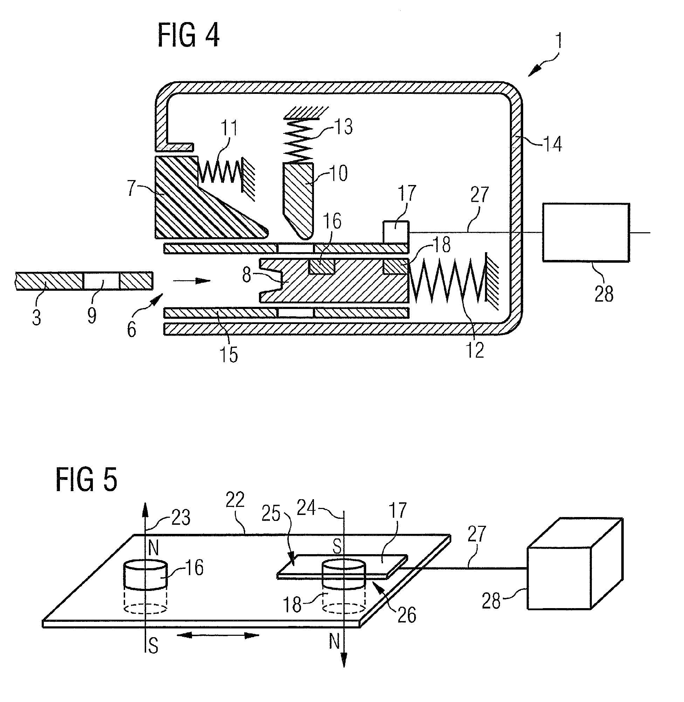

Figur 4 zeigt eine weitere mögliche Ausführungsform des erfindungsgemäßen Positionssensors. Die in Figur 4 dargestellten Merkmale entsprechen weitgehend den in Figur 2 dargestellten Merkmalen. Bei der hier dargestellten Ausführungsform des erfindungsgemäßen Positionssensors ist sowohl der erste Permanentmagnet 16 als auch der zweite Permanentmagnet 18 in die Ausstoßvorrichtung 8 eingelassen. Figur 4 zeigt den nicht angegurteten Zustand des Fahrzeuginsassen. Der Gurtriegel 3 befindet sich außerhalb des Gurtschlosses 1. Die Spiralfeder 12 drückt die Ausstoßvorrichtung 8 in die Richtung der Öffnung 6. In dieser Position ist der Magnetfeldsensor 17 in direktem Kontakt mit dem zweiten Permanentmagnet 18.

Wird nun der Gurtriegel 3 in die Öffnung 6 eingeführt, so drückt der Gurtriegel 3 die Ausstoßvorrichtung 8 gegen die Federkraft der Spiralfeder 12 solange zurück, bis der Sicherungsbolzen 10 in das Langloch 9 einrastet. Beim Erreichen dieser Position steht der erste Permanentmagnet 16 nun in direktem Kontakt mit dem Magnetfeldsensor 17. Der zweite Permanentmagnet 18 hat keinen Einfluss mehr auf den Magnetfeldsensor 17. Die Polarität des ersten Permanentmagneten 17 ist genau umgekehrt zur Polarität des zweiten Permanentmagneten 18 gewählt. Dadurch generiert der Magnetfeldsensor 17 bei direktem Kontakt mit dem ersten Permanentmagnet 16 ein anderes Signal als bei direkten Kontakten mit dem zweiten Permanentmagnet 18. Steht der zweite Permanentmagnet 18 dem Magnetfeldsensor 17 direkt gegenüber wird das Signal "Insasse nicht angeschnallt" generiert. Steht der erste Permanentmagnet 16 in direktem Kontakt mit dem Magnetfeldsensor 17 so wird das Signal "Insasse angeschnallt" generiert. Da der Magnetfeldsensor 17 erfindungsgemäß ständig im Kontakt mit dem einen oder anderen Permanentmagneten ist, führt ein von außen angelegtes störendes Magnetfeld nicht zur fehlerhaften Erkennung des Insassenanschnallzustandes. Die hier eingeführten Permanentmagneten können natürlich einzeln oder in ihrer Gesamtheit durch andere magnetfelderzeugende Elementen, wie zum Beispiel Elektromagnete, ersetzt werden.

Figur 5 verdeutlichet die Lage der in Figur 4 vorgestellten Magnete 16, 18 und des Magnetfeldsensors 17 zueinander. Die aus Figur 4 bekannte Ausstoßvorrichtung 8 definiert eine Ebene 22 in der der erste und der zweite Magnet 16 und 18 angeordnet sind. Die Verbindungslinien zwischen dem Nordpol N und dem Südpol S des ersten und zweiten Magneten 16 und 18 durchstoßen die Ebene 22 nahezu senkrecht. Die Ebene 22 ist linear entlang der Verbindungslinie zwischen den Magneten verschiebbar, was durch den Pfeil angedeutet ist. Der Magnetfeldsensor 17 ist über dieser Ebene 22 angeordnet und er wendet den Magneten 16, 18 ein zweite felderkennende Seite 26 zu. Die erste felderkennende Seite 25 des Magnetfeldsensors wird verwendet, wenn ein Ausführungsbeispiel nach Figur 3 umgesetzt wird.

Nach dem Ausführungsbeispiel aus Figur 4 wendet der erste Permanentmagnet 16 dem Magnetfeldsensor 17, wie in Figur 5 gezeigt, den Nordpol N zu und der zweite Permanentmagnet 18 wendet dem Magnetfeldsensor 17 den Südpol S zu. Je nach der Lage der Ebene 22 beeinflusst einmal der Nordpol N des ersten Permanentmagneten 16 oder der Südpol S des zweiten Permanentmagneten 18 den Magnetfeldsensor 17.

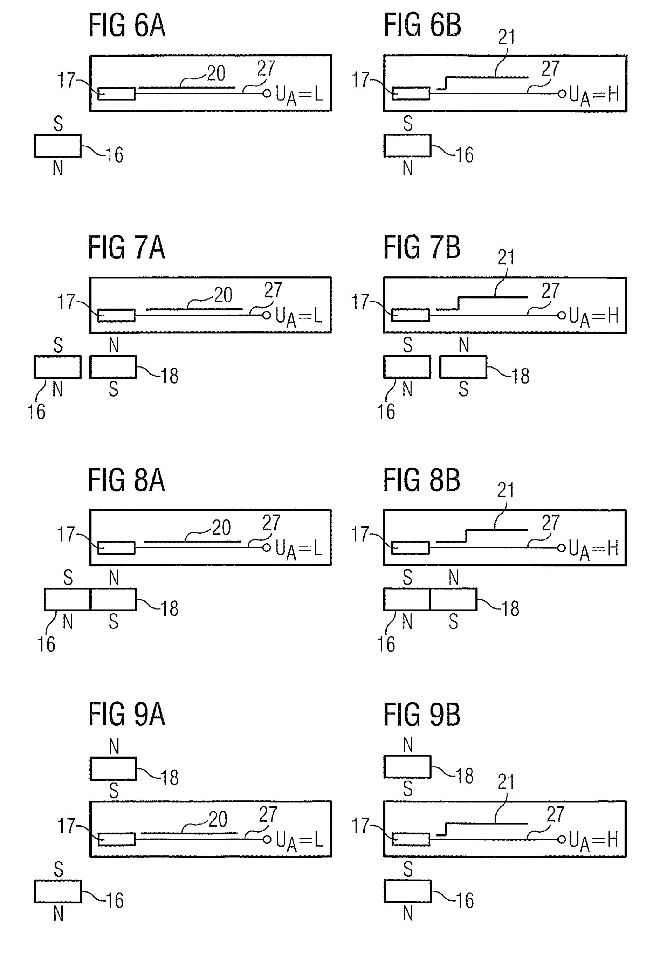

In den Figuren 6a und 6b wird der Gurtschlossschalter nach dem Stand der Technik noch einmal schematisch dargestellt. Die wesentlichen Merkmale sind der erste Permanentmagnet 16 und der Magnetfeldsensor 17. Figur 7a zeigt die Stellung des ersten Permanentmagneten 16 im Bezug zum Magnetfeldsensor 17 bei nicht angeschnalltem Fahrzeuginsassen. Der erste Permanentmagnet 16 ist in ausreichender Entfernung zum Magnetfeldsensor 17 positioniert, so dass die Feldstärke des ersten Permanentmagneten 16 nicht ausreicht, um den Magnetfeldsensor 17 zu einem Schaltvorgang zu zwingen. Der Magnetfeldsensor 17 liefert mithin das Signal "Insasse nicht angeschnallt" 20 (U_{A}=L).

Wird der erste Permanentmagnet 16 nun, wie in Figur 6b dargestellt, in die unmittelbare Nähe des Magnetfeldsensors 17 bewegt, so erfasst das magnetische Feld des ersten Permanentmagneten 16 den Magnetfeldsensor 17 mit einer hohen Feldstärke und zwingt ihn zu einem Schaltvorgang. Der Magnetfeldsensor 17 generiert daraufhin das Signal "Insasse angeschnallt" 21 (U_{A}=H).

In den Figuren 7 bis 9 werden verschiedene Ausführungsformen des erfindungsgemäßen Gurtschlossschalters schematisch dargestellt. Neben dem ersten Permanentmagneten 16 und dem Magnetfeldsensor 17 ist hier immer ein zweiter Permanentmagnet 18 vorhanden.

In Figur 7a sind der erste Permanentmagnet 16 und der zweite Permanentmagnet 18 in einer Ebene, parallel zur einer felderkennenden Fläche des Magnetfeldsensors 17 nebeneinander angeordnet. Der zweite Permanentmagnet 18 ist in unmittelbarer Nähe des Magnetfeldsensor 17 positioniert. Der Magnetfeldsensor 17 wird von der Feldstärke des zweiten Permanentmagneten 18 erfasst und er erzeugt des Signals "Insasse nicht angeschnallt" 20 (U_{A}=L). Auch ein weiteres störendes, von außen herangeführtes Magnetfeld kann den Magnetfeldsensor 17 nicht in einen falschen Schaltzustand zwingen, da die Feldstärke des äußeren Magnetfeldes im Allgemeinen die Feldstärke des zweiten Permanentmagneten 18 am Ort des Magnetfeldsensors 17 nicht übersteigen wird.

In der Figur 7b ist die Position des ersten Permanentmagneten 16 und des zweiten Permanentmagneten 18 in Bezug auf den Magnetfeldsensor 17 bei angeschnalltem Insassen dargestellt. Der zweite Permanentmagnet 18 befindet sich nun nicht mehr in der unmittelbaren Nähe zum Magnetfeldsensor 17. Dafür ist der erste Permanentmagnet 16 in die unmittelbare Nähe des Magnetfeldsensor 17 gerückt. Die Feldstärke des ersten Permanentmagneten 16 ist ausreichend um den Magnetfeldsensor 17 in den Zustand "Insasse angeschnallt" zu schalten.

Um dem Magnetfeldsensor 17 deutlich die zwei Schaltzustände vorzugeben, sind die Permanentmagneten 16 und 18 entgegengesetzt gepolt. Der erste Permanentmagnet 16 trägt seinen Südpol in diesem Beispiel auf der dem Magnetfeldsensor 17 zugewandten Seite, während der zweite Magnetfeldsensor 18 seinen Nordpol auf der dem Magnetfeldsensor 17 zugewandten Seite trägt. Diese entgegengesetzte Polarisierung der zwei Magnete 16 und 18 stellt die einwandfreie Erkennung der beiden Schaltzustände "Insasse nicht geschnallt" und "Insasse angeschnallt" sicher. Die Feldstärke äußerer störender Magnetfelder reicht in der Regel nicht aus, um die Feldstärken der beiden Permanentmagneten 16 und 18 zu überlagern und den Magnetfeldsensor 17 zur Erzeugung falscher Signale zu zwingen.

In Figur 8a und 8b wird dargestellt, dass der erste Permanentmagnet 16 und der zweite Permanentmagnet 18 durchaus vorteilhaft direkt aneinandergrenzen können, um den erfindungsgemäßen Gurtschlossschalter darzustellen. Wichtig hierbei ist nur die entgegengesetzte Polarisierung des ersten Permanentmagnet 16 und des zweiten Permanentmagneten 18 im Bezug auf die felderkennende Seite des Magnetfeldsensors 17, sowie deren Lage zum Magnetfeldsensor 17 bei nicht angeschnalltem Insassen, wie in Figur 8a dargestellt oder bei angeschnalltem Insassen, wie in Figur 8b dargestellt.
Eine weitere Ausführungsform des erfindungsgemäßen Positionsschalters ist in den Figuren 9a und 9b schematisch dargestellt. Hier ist der zweite Permanentmagnet 18 immer in unmittelbarer Nähe zum Magnetfeldsensor 17 angeordnet. Der zweite Permanentmagnet 18 ist nicht beweglich. Beweglich hingegen ist der erste Permanentmagnet 16 der in Figur 9a in einer ausreichenden Entfernung zum Magnetfeldsensor 17 angeordnet ist. Die vom zweiten Permanentmagneten 18 erzeugte Feldstärke ist ausreichend groß den Magnetfeldsensor 17 in den Zustand "Insasse nicht angeschnallt" zu schalten, solange der erste Permanentmagnet 16 nicht in unmittelbarer Nähe zum Magnetfeldsensor 17 positioniert ist. Dies wird in Figur 9a gezeigt. Äußeren störenden Magnetfeldern gelingt es nicht die Magnetfeldstärke des zweiten Permanentmagneten 18 derart zu überlagern dass der Magnetfeldsensor 17 gestört wird.

In Figur 9b ist die Position des ersten Permanentmagneten 16 bei angeschnalltem Fahrzeuginsassen dargestellt. Der erste Permanentmagnet 16 hat eine wesentlich größere Feldstärke als der zweite Permanentmagnet 18. Befindet sich der erste Permanentmagnet 16 in unmittelbarer Nähe zum Magnetfeldsensor 17, so überlagert er signifikant die vom zweiten Permanentmagneten 18 erzeugte magnetische Feldstärke. In dieser Stellung des ersten Permanentmagneten 16 wird der Magnetfeldsensor 17 den Schaltzustand "Insasse angeschnallt" erzeugen. Da der erste Permanentmagnet 16 unter dem Magnetfeldsensor 17 und der zweite Permanentmagnet 18 über dem Magnetfeldsensor 17 angeordnet ist, ist es wichtig, dass die beiden Permanentmagneten 16 und 18 jeweils den gleichen Pol dem Magnetfeldsensor 17 zuwenden. In diesem Beispiel wenden beide Permanentmagnete 16 und 18 dem Magnetfeldsensor 17 ihren Südpol zu.

Da die Feldstärke des ersten Permanentmagneten 16 jedoch signifikant größer ist als die des zweiten Permanentmagneten 18 kann der unter dem Magnetfeldsensor 17 angeordnete erste Permanentmagnet 16 den Magnetfeldsensor 17 in den Schaltzustand "Insasse angeschnallt" umschalten.

Entfernt sich der erste Permanentmagnet 16 vom Magnetfeldsensor 17 wie in Figur 9a dargestellt, so dominiert der Südpol des zweiten Permanentmagneten 18 den Magnetfeldsensor 17 und der Schaltzustand "Insasse nicht angeschnallt" wird erreicht.

## Patentansprüche

1. Magnetischer Positionssensor, insbesondere für ein Gurtschloss (1) zur Insassensicherung in einem Kraftfahrzeug, mit einem Magnetfeldsensor (17) und einem ersten Magnet (16), der von einer ersten in eine zweite Position bewegbar ist, wobei die erste Position abseits vom Magnetfeldsensor (17) angeordnet ist und die zweite Position in unmittelbarer Nähe zum Magnetfeldsensor (17) lokalisiert ist, **dadurch gekennzeichnet, dass** das von dem ersten Magnet (16)in seiner ersten Position erzeugte Magnetfeld ohne wirkungsvollen Einfluss auf den Magnetfeldsensor (17) ist und dass ein zweiter Magnet (18) ausgebildet ist, dessen Magnetfeld sich wesentlich von dem des ersten Magneten (16) unterscheidet und dass der zweite Magnet (18) zumindest dann in unmittelbarer Nähe zum Magnetfeldsensor (17) angeordnet ist, wenn sich der erste Magnet (16) in seiner ersten Position befindet, wobei der zweite Magnet (18) den Magnetfeldsensor (17) mit einem definierten Magnetfeld beaufschlagt, das störende äußere Magnetfelder (19)ausreichend überlagert.

2. Magnetischer Positionssensor nach Anspruch 1, **dadurch gekennzeichnet, dass** der erste Magnet (16) und der zweite Magnet (18) in einer Ebene (22) nebeneinander angeordnet sind, wobei die Verbindungslinien (23; 24) zwischen dem Nordpol (N) und dem Südpol (S) des ersten Magneten (16) und dem Nordpol (N) und dem Südpol (S) des zweiten Magneten (18) weitgehend senkrecht zu dieser Ebene (22) stehen.

3. Magnetischer Positionssensor nach Anspruch 2, **dadurch gekennzeichnet, dass** auf der Seite der Ebene (22) auf der der Nordpol (N) des ersten Magneten (16) angeordnet ist, der Südpol (S) des zweiten Magneten (18) angeordnet ist.

4. Magnetischer Positionssensor nach Anspruch 3, **dadurch gekennzeichnet, dass** der zweite Magnet (18) dem Magnetfeldsensor (17) direkt gegenüberliegt, wenn sich der erste Magnet (16) in seiner ersten Position befindet.

5. Magnetischer Positionssensor nach Anspruch 1, **dadurch gekennzeichnet, dass** der zweite Magnet (18) in seiner Position unveränderbar auf einer ersten felderkennenden Seite (25) des Magnetfeldsensors (17) angeordnet ist.

6. Magnetischer Positionssensor nach Anspruch 5, **dadurch gekennzeichnet, dass** der zweite Magnet (18) baulich mit dem Magnetfeldsensor (17) verbunden ist.

7. Magnetischer Positionssensor nach Anspruch 6, **dadurch gekennzeichnet, dass** der erste Magnet (16) auf einer zweiten felderkennenden Seite (26) des Magnetfeldsensors (17) angeordnet ist und dass der erste Magnet (16) dem Sensor den gleichen Magnetpol zuwendet, wie der zweite Magnet(18).

8. Magnetischer Positionssensor nach Anspruch 7, **dadurch gekennzeichnet, dass** der erste Magnet (16) eine deutlich höhere Feldstärke erzeugt, als der zweite Magnet (18).
